# EUROPEAN PATENT SPECIFICATION

(11) **EP 1 555 457 B1**
(45) Date of publication and mention of the grant of the patent: **01.09.2010**
(21) Application number: 02777931.3
(22) Date of filing: 23.10.2002
(51) Int. Cl.: F16H 25/06, F16H 25/08, B23Q 16/02

(54) **CAM DEVICE**
NOCKENVORRICHTUNG
DISPOSITIF DE CAME

(43) Date of publication of application: 20.07.2005
(73) Proprietor: SANKYO MANUFACTURING COMPANY, LTD., Kita-ku Tokyo 114-0012 (JP)
(72) Inventor: KATO, Heizaburo, Ogasa-gun, Shizuoka 439-0019 (JP)
(74) Representative: Charlton, Peter John
(86) International application number: PCT/JP2002/011003
(87) International publication number: WO 2004/038255

(56) References cited:
- DE-A1- 3 318 398
- JP-A- 6 249 316
- JP-U- 63 121 852

## Description

### Technical Field

The present invention relates to cam devices that, on one hand, ensure higher ecological standards by adopting a device configuration that uses cams as a main component, that enable the transmission of high rotation torque while being compact, that can achieve high-speed operation, and that can as well be suitably applied as a base machine for various types of mechanical equipments such as APC devices for handling heavy items.

### Background Art

With conventional automatic pallet changing devices (APC devices) that are used in various machine tools, a hydraulic device is used for lifting operations to raise and lower a pallet while a worm gear mechanism is used for rotation operations to revolve the pallet, because the pallet and also the workpiece mounted thereon have a considerable weight. The large output required to handle heavy items is obtained with the hydraulic device and the worm gear mechanism.

On the other hand, pick-and-place devices and automatic tool changer devices (ATC devices) aimed for lightweight work are known as devices that operate similarly to APC devices. Such pick-and-place devices and the like are configured with a cam as a main component. More specifically, they are provided with a rotation converting cam such as a roller gear cam at the input shaft. A lift generating cam is provided, for example, by forming a groove cam integrally into the rotation converting cam, or by attaching a separate plate cam at the input shaft. By inputting the rotation output of the rotation converting cam to the output shaft via a turret, and also inputting the lift output of the lift cam to the output shaft via a lever, the output shaft can be caused to perform a lifting operation and a rotation operation.

Also, in particular, the turret and the output shaft are spline coupled in order to ensure transmission of rotation between these components while allowing the output shaft to be lifted, so that the output shaft is subjected to a rotation operation with the turret, while being subjected to a lifting operation with the lever without interfering with the rotation operation (see Utility Model Application Laid-open Publication No. 63-121852).

However, an issue with conventional APC devices is that, since hydraulic devices use oils, the working environment is adversely affected. That is to say, in addition to the arduous maintenance work required with hydraulic devices, it is necessary to provide factory facilities with equipment for handling leaked and spattered oil. Moreover, appropriate measures are required for discarding and disposing of oils after use. Thus, conventional APC devices provided with hydraulic devices pose a variety of problems. Coupled with demands by society regarding current environmental problems, there is a need for devices that do not use such hydraulic devices to be developed as ecologically sound technologies that contribute to environmental improvements.

Furthermore, with conventional APC devices, it is difficult to precisely synchronize the lifting operation of the hydraulic device with the rotation operation of the worm gear mechanism due to their different driving forms. Consequently, when switching from a lifting operation to a rotation operation, as well as from a rotation operation to a lifting operation, it is necessary to briefly stop both the hydraulic device and the worm gear mechanism, and thus there is the issue that it is difficult to achieve high-speed device operation.

In solving the issues of using such hydraulic devices and those of conventional APC devices in which these hydraulic devices and worm gear mechanisms are combined in order to achieve output for lifting operations and rotation operations, it is conceivable to directly implement configurations such as conventional pick-and-place devices in which the above-described cams are used as the main component. To do this, it is necessary to increase the size of structural components such as the input shaft, output shaft, arm, and turret so that heavy items can be handled.

In particular, because pick-and-place devices and the like are devised for lightweight workpieces, the required rotation torque can be small, and for this reason, the transmission of rotation torque is achieved by the spline coupling of the output shaft and the turret in consideration of the lifting operation. However, with spline coupling, it is difficult to transmit high-torque rotation that is required for handling heavy items, and when using this spline coupling as is, it is necessary to increase considerably the size of the turret and the output shaft, which leads to a problem that the device becomes extremely large. Thus, there are issues that when such an APC device itself is made larger, it becomes necessary to use factory facilities with strong foundations for installing the device, and that the drive source is required to have a large output power.

The issues above were described with APC devices given as an example, but the same issues apply for any large mechanical device that outputs both lifting operations and rotation operations for handling heavy items.

The present invention was arrived at in light of the foregoing conventional issues, and it is an object thereof to provide a cam device that, on one hand, ensures higher ecological standards by adopting a device configuration that uses cams as the main component, that enables the transmission of high rotation torque while being compact, that can achieve high-speed operation, and that can as well be suitably applied as a base machine for various types of mechanical equipments such as APC devices for handling heavy items.

JP63121852U, which constitutes the closest prior art, discloses a cam device for performing a rotation movement and a lifting movement.

### Disclosure of Invention

In order to achieve the above-described object, the present invention provides a cam device comprising:
an output shaft for performing a rotation operation and a lifting operation by receiving a rotation movement and a lifting movement that are respectively output from a rotation converting cam and a lift generating cam that are provided on an input shaft that is driven to rotate, and
a turret for inputting, to said output shaft, said rotation movement that is output from said rotation converting cam,
wherein said output shaft, which includes said turret, performs said rotation operation and said lifting operation while being guided by a guide member;
characterised in that:
said turret is formed integrally with said output shaft, and
said output shaft, which includes said turret, is formed as a hollow cylindrical member, and said guide member for guiding said rotation operation and said lifting operation of said output shaft is inserted into said output shaft.

Preferably, in the cam device, a pair of lifting arms for inputting, to said output shaft, said lifting movement that is output from said lift generating cam is provided in correspondence with said lift generating cam, wherein each of said lifting arms has a hole through which said input shaft is inserted so that said lifting arm does not interfere with said input shaft.

Further, the cam device may comprise: a secondary input shaft that is arranged side by side with the input shaft and that rotates in synchronization with the input shaft via a rotation transmitting means; at least two primary shaft-side lift generating cams arranged at the input shaft; at least two secondary shaft-side lift generating cams arranged at the secondary input shaft; and a lift plate that is lifted by receiving a lift movement that is output from the at least four secondary shaft-side lift generating cams and primary shaft-side lift generating cams; and wherein the output shaft performs the lifting operation by receiving the lifting movement from the lift plate.

### Brief Description of Drawings

FIG. 1 is a sectional side view showing a preferred embodiment of a cam device according to the present invention when applied to an APC device.
FIG. 2 is a top view cross section of the APC device of FIG. 1.
FIG. 3 is a perspective view of an external appearance of the APC device of FIG. 1.
FIG. 4 is a partially enlarged sectional side view showing an ascending lifting state of an output shaft of the APC device of FIG. 1.
FIG. 5 is an enlarged front view of an annular engagement groove and a turret portion of the APC device of FIG. 1.
FIG. 6 is a line chart of the timing of the roller gear cam and the plate cams used in the APC device of FIG. 1.
FIG. 7 is an explanatory diagram for illustrating the operation of the APC device of FIG. 1.
FIG. 8 is a sectional side view showing a preferred embodiment of a cam device according to the present invention when applied to an APC device.
FIG. 9 is a top view cross section of the APC device of FIG. 8.
FIG. 10 is a perspective view of an external appearance of the APC device of FIG. 8.
FIG. 11 is a sectional side view showing a descending lifting state of an output shaft of the APC device of FIG. 8.
FIG. 12 is a line chart of the timing of the roller gear cam and the plate cams used in the APC device of FIG. 8.
FIG. 13 is an explanatory diagram for illustrating the operation of the APC device in FIG. 8.

### Best Mode for Carrying Out the Invention

### First Embodiment

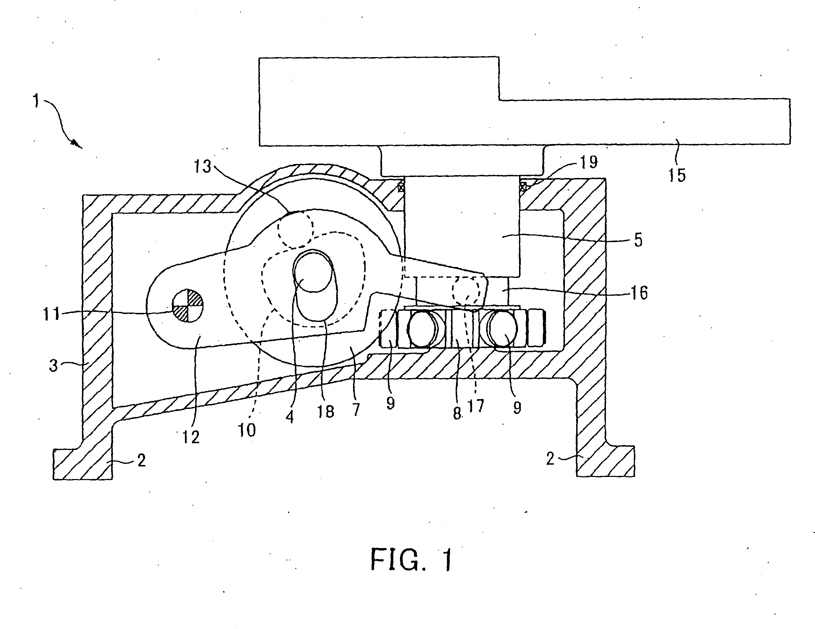

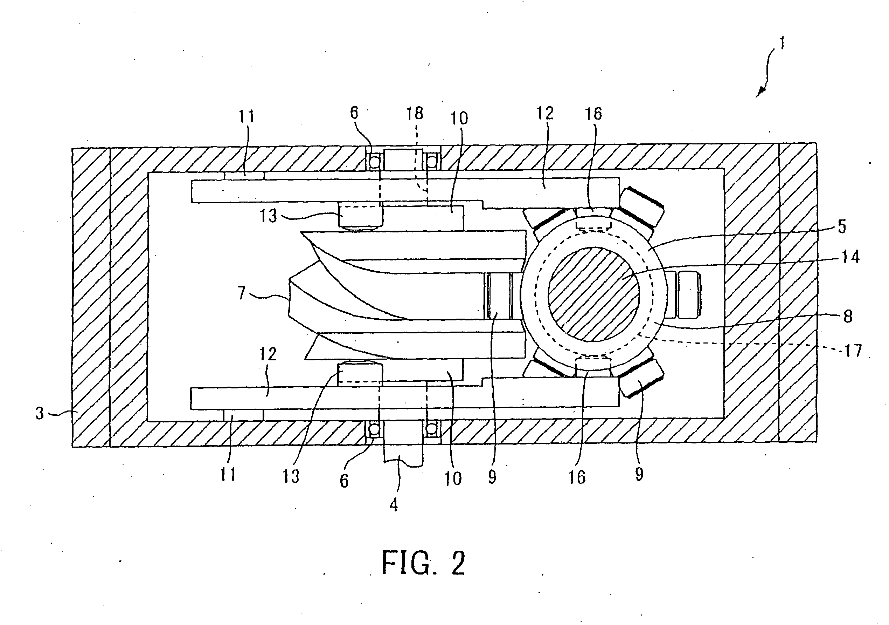

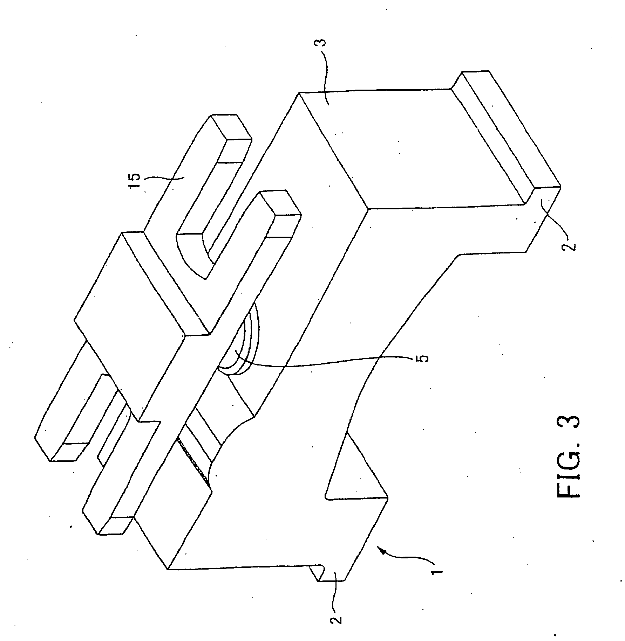

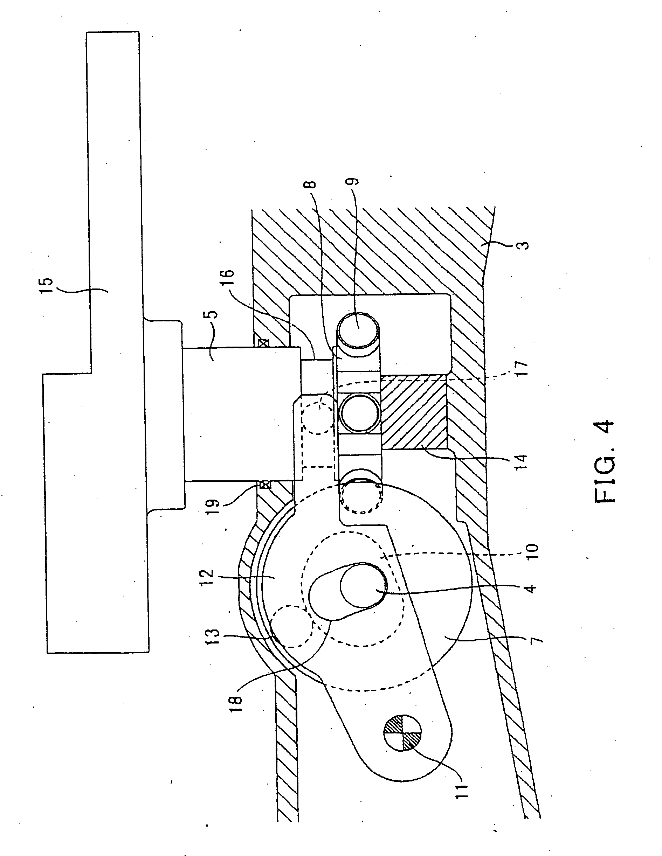

The following is a detailed description of a first preferred embodiment of a cam device according to the present invention with reference to the accompanying drawings. The embodiment shown in FIG. 1 to FIG. 7 is a cam device as applied to an APC device 1 . An input shaft 4 is provided in a horizontal direction in a chassis-shaped housing 3 having integrated leg portions 2. An output shaft 5 is provided adjacent to and in a vertical direction intersecting with the input shaft 4, and performs rotation operations and lifting operations.

The input shaft 4 is rotatably supported on both sides in the housing 3 by bearing members 6 and is continuously driven to rotate in one direction by a rotation drive source that is not shown in the drawings. On the input shaft 4, a roller gear cam 7 is provided as a rotation converting cam that produces, from the continuous one-way rotation of the input shaft 4, an intermittent rotation movement in which rotation and halt are repeated. The roller gear cam 7 engages with rotation transmitting cam followers 9 of a turret 8, which are described later, provided at the output shaft 5 so as to be readily engaged/disengaged, and outputs the intermittent rotation movement, which is generated in accordance with the cam profile, to the turret 8 via the rotation transmitting cam followers 9.

At the input shaft 4, a pair of plate cams 10 is provided on both sides of the roller gear cam 7 as lift generating cams, and these produce a lifting movement from the one-way continuous rotation of the input shaft 4. The plate cams 10 have the same cam profile and are provided at the same phase around the input shaft 4. In the present embodiment, the plate cams 10 are formed integrally with the roller gear cam 7 by being manufactured in the side surfaces of the roller gear cam 7. According to requirements, it is also possible to attach the plate cams 10 to the input shaft 4 as components separate from the roller gear cam 7.

The plate cams 10 are engaged with oscillating arm cam followers 13 that are provided at a central portion of oscillating arms 12, which are lifting means each being supported at one end by a support pin 11 on the inner wall of the housing 3, and the other end of the oscillating arms 12 is caused to move reciprocally in the vertical direction in accordance with the cam profile of the plate cams 10, which generate lifting movements. By providing the plate cams 10 and the roller gear cam 7 on the same input shaft 4, the timing of lifting movements and rotation movements are completely synchronized.

On the other hand, the output shaft 5 is formed as a hollow cylindrical member, and is arranged inserted over a solid columnar guide member 14 that is arranged protruding from a base portion of the housing 3. The output shaft 5 is supported so as to be rotatable and vertically slidable in its entirety with respect to the housing 3 via the guide member 14, and the guide member 14 guides the rotation operations and lifting operations of the output shaft. A pallet 15 on which a workpiece W is placed is attached to a protruding end of the output shaft 5, which extends outwards from the housing 3.

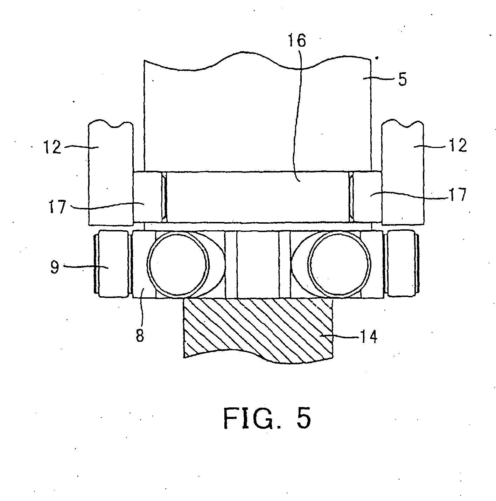

Furthermore, an annular engagement groove 16 is formed along the rotation direction of the output shaft 5, and lift cam followers 17 each provided at the other end of the oscillating arms 12 are sandwiched between the upper wall and lower wall of the annular engagement groove 16 and are slidably engaged thereto. In this way, while the lift cam followers 17 slide in the annular engagement groove 16 so as not to interfere with the rotation operation of the output shaft 5, they are engaged in the vertical direction with respect to the annular engagement groove 16 so as to input, to the output shaft 5, the lifting movement that is output by the plate cams 10. In particular, as is also shown in FIG. 5, the pair of oscillating arms 12 on both sides of the roller gear cam 7 is arranged such that the arms sandwich the output shaft 5 horizontally therebetween from the left and right sides along its diameter direction in order to input approximately equal lifting power to the output shaft 5 from both sides thereof so as to subject the output shaft 5 to lifting movements stably in the directly-vertical direction without causing it to tilt.

Further, the output shaft 5 is provided with a turret 8 that is positioned below the annular engagement groove 16 and that has rotation transmitting cam followers 9 which are engaged with the roller gear cam 7. The rotation transmitting cam followers 9 are arranged at equal intervals in the circumferential direction of the turret 8. In this way, the turret 8 is configured so that the intermittent rotation movements that are output by the roller gear cam 7 are input to the output shaft 5.

The turret 8, in particular, is formed integrally with the output shaft 5 as a portion of the output shaft 5 itself, without any kind of junction with respect to the output shaft 5, and consequently, the output shaft 5 and the turret 8 become a functional portion that is fabricated as a single component, and are formed such that they are coupled together through the high rigidity of the material of that component.

It should be noted that, in order to keep the height of the housing 3 low, the input shaft 4 is arranged inserted through the oscillating arms 12, and in each of the oscillating arms 12, which oscillate about the support pins 11, a long hole 18 is formed along the locus of the oscillation operations of each arm at a position where the input shaft 4 is inserted, such that the arms do not interfere with the input shaft 4 when they are oscillating. Furthermore, a sealing member 19 is arranged in the housing 3 to seal the portion through which the output shaft 5 passes.

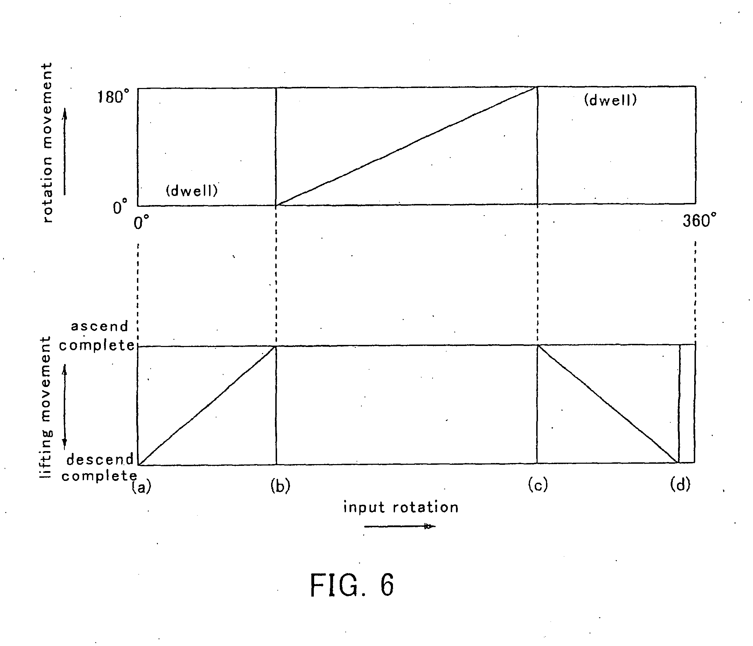

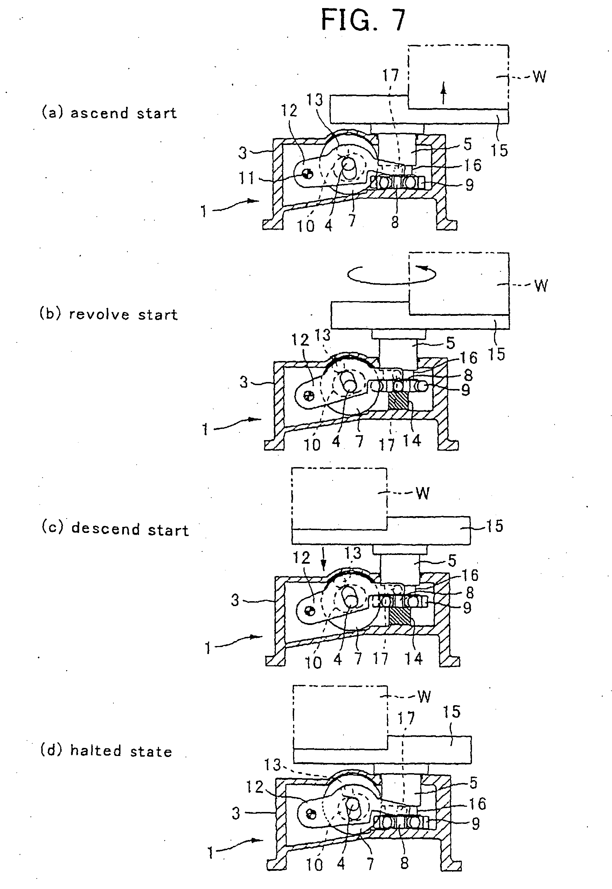

FIG. 6 and FIG. 7 show line charts of the timing of an intermittent rotation movement and a lifting movement respectively output by the roller gear cam 7 and the plate cams 10 that are rotated by the input shaft 4, which is rotationally driven continuously in one direction, and also show corresponding operation states of the APC device 1.

Within the period in which the input shaft 4 rotates once for 360°, during the period ((a)-(b)) in which the output shaft 5 carries out an ascending lifting operation, while being guided with the guide member 14, that is caused by the plate cams 10 via the oscillating arms 12, the roller gear cam 7 is in a dwell period in which no rotation displacement is output even when the input shaft 4 is rotating, and the rotation of the turret 8 is in a halted state. Then, when the ascending lifting operation of the output shaft 5 is completed and the output shaft 5 enters a halted state, the output shaft 5 carries out a rotation operation for 180° ((b)-(c)), while being guided with the guide member 14, that is caused by the roller gear cam 7 via the turret 8. Then, when the rotation operation of the output shaft 5 up to 180° is completed and the roller gear cam 7 enters a dwell period so that the rotation of the turret 8 is brought into a halted state, the output shaft 5 carries out a descending lifting operation ((c)-(d)), while being guided with the guide member 14, that is caused by the plate cams 10. These operations are repeated for every revolution of the input shaft 4. It should be noted that, in the period from the completion of the descending lifting operation until the start of the next ascending lifting operation, a slight period of a halted state (d) is created according to the settings of the cam profile of the plate cams 10.

Consequently, the pallet 15 attached to the output shaft 5 continuously carries out an operation that is completed with two revolutions of the input shaft wherein, for the first revolution of the input shaft 4, the pallet is raised, rotated for 180°, and lowered, and then for the second revolution, it is raised again, rotated for 180° in the same direction, and lowered. During this period, the input shaft 4, which causes the output shaft 5 to lift and rotate, continuously rotates at a constant velocity without slowing down or pausing.

In this series of operations, the turret 8, which is formed integrally with the output shaft 5, is lifted upwards and downwards together with the output shaft 5. That is, when the output shaft 5 completes an ascending lift during the dwell period of the roller gear cam 7 (at this time the cam profile of the roller gear cam 7 is straight in the vertical direction so that there is no displacement of the rotation transmitting cam followers 9 engaged with this cam) in accordance with the cam profiles of the roller gear cam 7 and the plate cams 10, the rotation transmitting cam followers 9 engage with the roller gear cam 7, after which the rotation movement of the roller gear cam 7 is input to the turret 8, and when the output shaft 5 subsequently performs a descending lift during the dwell period of the roller gear cam 7, the rotation transmitting cam followers 9 are released from the roller gear cam 7.

It should be noted that the extent of the release of the rotation transmitting cam followers 9 from the roller gear cam 7 can be adjusted in relation to the lift amount, and it is possible to set the meshing of these components so that they do not completely disengage, or to set them so that they do completely disengage. When they are set so that they completely disengage, it is preferable that a detent or the like is provided to impede the rotation of the turret 8 or the output shaft 5 in order to ensure restoration of engagement of the meshing.

With the cam device according to the present embodiment described above, since the turret 8 is formed integrally with the output shaft 5, it is possible to ensure considerable rigidity without enlarging these components to which the lifting movements and rotation movements are input. It is also possible to input high rotation torque to the turret 8 while ensuring lifting operations and rotation operations that compare favorably with conventional operations with respect to the output shaft 5, and it is also possible to handle heavy items appropriately while maintaining a compact device configuration.

Furthermore, maintenance becomes easy and it is possible to contribute to higher ecological standards, since the device is configured with the cams 7 and 10 as main components from which hydraulic devices are eliminated.

Furthermore, since the roller gear cam 7 and the plate cams 10 are provided on the single input shaft 4 and it is possible to achieve output for both lifting operations and rotation operations from the rotation of the input shaft 4, these operations can be completely synchronized, thus enabling higher speeds in the device operation.

Moreover, since the output shaft 5 is formed as a hollow cylindrical member that is provided in one piece with the turret 8 and its rotation operations and lifting operations are guided by the guide member 14 inserted in the output shaft 5, the guide member 14 is able to support the load applied to the output shaft 5, which handles heavy items, and suitably guide the movements therein, thus enabling the stability of movement of the output shaft 5 to be improved.

Furthermore, since the oscillating arms 12, which input a lifting movement to the output shaft 5, are provided as a pair and positioned flanking the output shaft 5 on both sides, the oscillating arms 12 are able to share the load of heavy items and ensure a stable, directly-vertical lifting movement without tilting the output shaft 5. It is possible to improve the stability of movement of the output shaft 5 also from this perspective.

The foregoing embodiment was described using the plate cams 10 as illustrative examples of lift generating cams, but instead of these, it is also possible to provide groove cams as depressions on both side surfaces of the roller gear cam 7.

Furthermore, the foregoing embodiment was described using an example of a cam device according to the present invention being applied to the APC device 1, but there is no limitation to this, and naturally, the invention may also be applied to various large-scale mechanical devices that output both lifting operations and rotation operations to handle heavy items.

### Second Embodiment

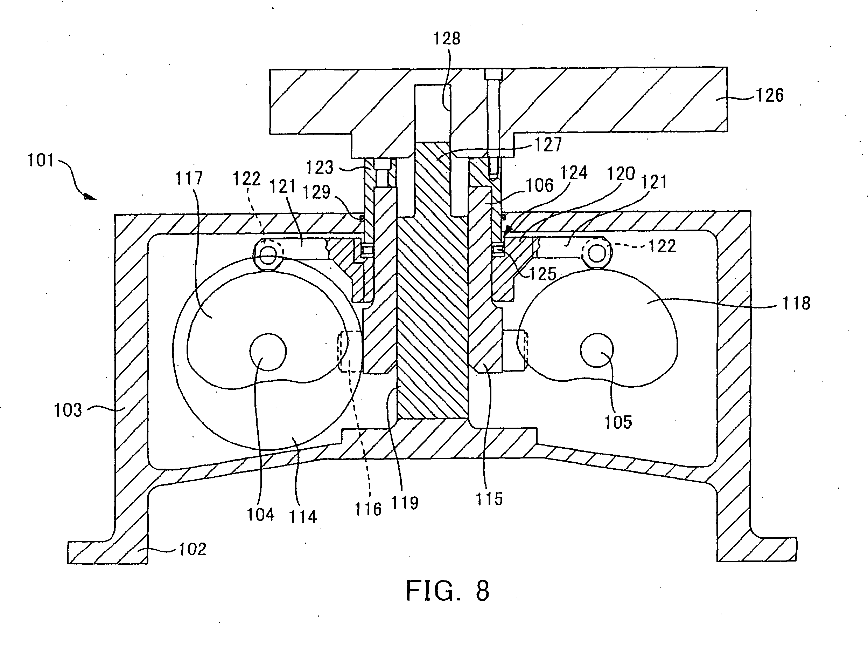

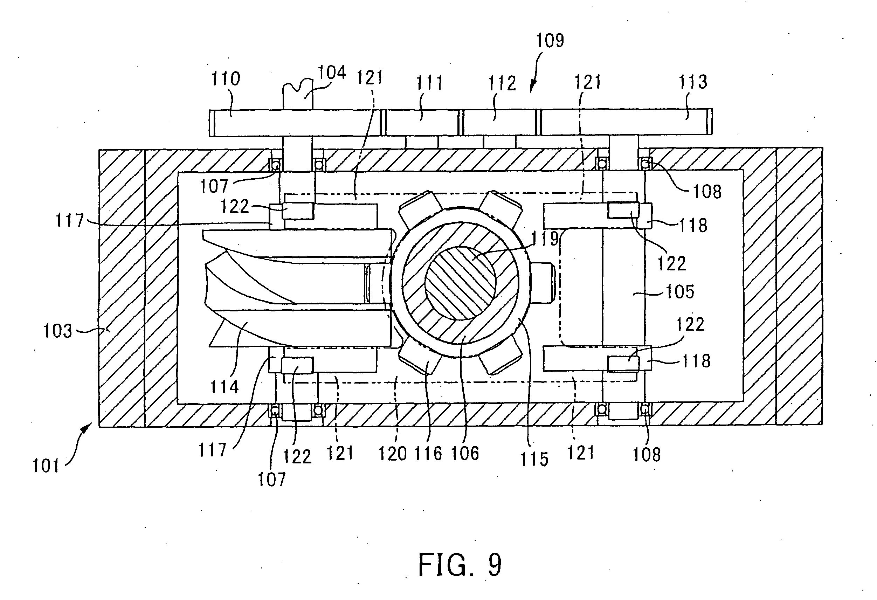

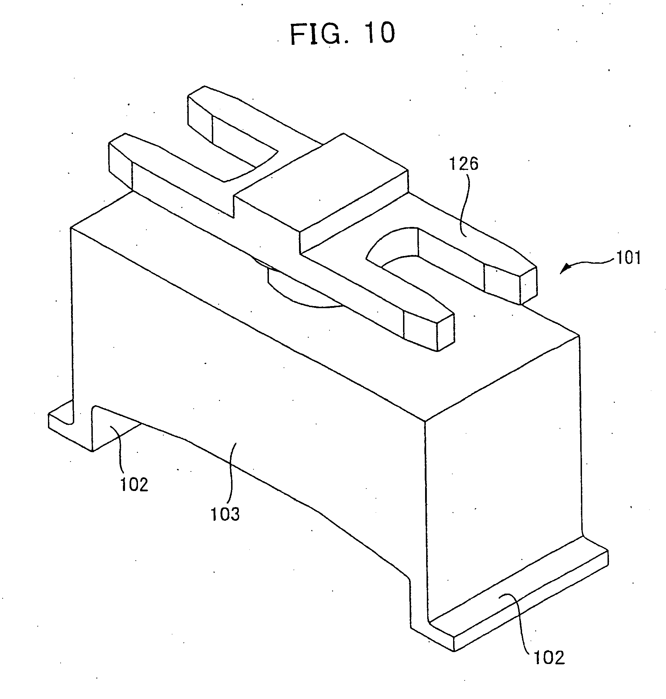

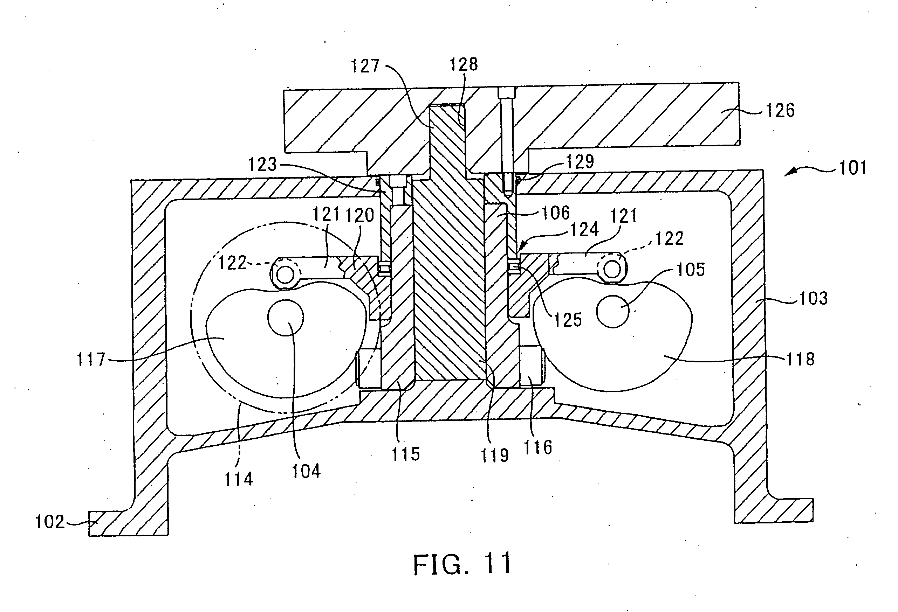

The following is a detailed description of a second preferred embodiment of a cam device according to the present invention with reference to the accompanying drawings. The embodiment shown in FIG. 8 to FIG. 13 is a cam device as applied to an APC device 101. A primary input shaft 104 and a secondary input shaft 105 are provided side by side parallel to each other in a horizontal direction with an interval therebetween in a chassis-shaped housing 103 having integrated leg portions 102. An output shaft 106 is provided between the primary input shaft 104 and the secondary input shaft 105 and in a vertical direction intersecting with the input shafts, and performs rotation operations and lifting operations.

The primary input shaft 104 is rotatably supported on both sides in the housing 103 by bearing members 107 and is continuously driven to rotate in one direction by a rotation drive source that is not shown in the drawings. The secondary input shaft 105 is formed with the same diameter as the primary input shaft 104 and is rotatably supported on both sides in the housing 103 by bearing members 108. A rotation transmitting means 109 is provided between the primary input shaft 104 and the secondary input shaft 105 such that the rotation of the primary input shaft 104 is transmitted to the secondary input shaft 105 to synchronize the rotation of the secondary input shaft 105 with the primary input shaft 104, that is, so that continuous one-way rotation with at least the same number of times of revolutions is achieved.

In the example shown in the figures, the rotation transmitting means 109 is made of: a drive gear 110 that is provided at the primary input shaft 104 and that rotates unitarily therewith; a first idle gear 111 that is rotatably supported in the housing 103 and that meshes with the drive gear 110; a second idle gear 112 that is rotatably supported in the housing 103 and that meshes with the first idle gear 111; and a driven gear 113 that is provided at the secondary input shaft 105 and that meshes with the second idle gear 112 to rotationally drive the secondary input shaft 105 . Like components are used for the drive gear 110 and the driven gear 113, as well as for the first and second idle gears 111 and 112, such that the primary input shaft 104 and the secondary input shaft 105 can be caused to rotate in opposite directions at an equal number of times of revolutions. It is needless to say that, even when the primary input shaft 104 and the secondary input shaft 105 have different diameters, it is possible to let them rotate in synchronization by appropriately setting the gear ratio of the rotation transmitting means 109.

On the primary input shaft 104, a roller gear cam 114 is provided as a rotation converting cam that produces, from the continuous one-way rotation of the primary input shaft 104, an intermittent rotation movement in which rotation and halt are repeated. The roller gear cam 114 engages with rotation transmitting cam followers 116 of a turret 115, which are described later, provided at the output shaft 106 so as to be readily engaged/disengaged, and outputs the intermittent rotation movement, which is generated in accordance with the cam profile, to the turret 115 via the rotation transmitting cam followers 116.

At the primary input shaft 104, at least two plate cams 117 are provided, as primary shaft-side lift generating cams, on the sides of the roller gear cam 114, respectively one on each side, and these produce a lifting movement from the one-way continuous rotation of the primary input shaft 104. The plate cams 117 have the same cam profile and are provided at the same phase around the primary input shaft 104. In the present embodiment, the plate cams 117 are formed integrally with the roller gear cam 114 by being manufactured on the side surfaces of the roller gear cam 114. According to requirements, it is also possible to attach the plate cams 117 to the primary input shaft 104 as components separate from the roller gear cam 114.

At the secondary input shaft 105, at least two plate cams 118 are also provided, as secondary shaft-side lift generating cams, arranged respectively in opposition to the plate cams 117 of the primary input shaft side, and these produce a lifting movement from the one-way continuous rotation of the secondary input shaft 105 . The secondary input shaft 105 rotates in reverse to the primary input shaft 104, and therefore, the plate cams 118 have a cam profile that is the inverted profile of the plate cams 117 of the primary input shaft side and are provided at the same phase around the secondary input shaft 105, so that in the period of one revolution of the primary input shaft 104 and the secondary input shaft 105, all the plate cams 117 and 118 produce an equivalent lifting movement.

If the rotating directions of the primary input shaft 104 and the secondary input shaft 105 are the same, then all the plate cams 117 and 118 are provided with the same cam profile and at the same phase. Further, needless to say, even when the primary input shaft 104 and the secondary input shaft 105 have different diameters, it is possible to let all the plate cams 117 and 118 produce an equivalent lifting movement by appropriately setting the cam profile of each of the plate cams 117 and 118 of the primary input shaft 104 and the secondary input shaft 105. The timing of the lifting movement and the rotation movement is completely synchronized by providing both the plate cams 117 of the primary input shaft side and the roller gear cam 114 at the same primary input shaft 104, and by synchronizing the rotation of the secondary input shaft 105 with the primary input shaft 104 as regards the secondary input shaft side plate cams 118.

On the other hand, the output shaft 106 is formed as a hollow cylindrical member, and is arranged inserted over a solid columnar guide member 119 that is arranged protruding from a base portion of the housing 103. The output shaft 106 is supported so as to be rotatable and vertically slidable in its entirety with respect to the housing 103 via the guide member 119, and the guide member 119 guides these rotation operations and lifting operations.

A lift plate 120 is provided positioned approximately at a central portion in the axial direction of the output shaft 106. The lift plate 120 is formed with outer dimensions such that the width between the primary input shaft and the secondary input shaft does not interfere with the roller gear cam 114, and arm portions 121 are integrally formed at the four corners thereon and reach directly above the respective plate cams 117 and 118 . Lift cam followers 122, each engaging with each of the plate cams 117 and 118 and producing mutually equivalent lifting movements, are provided at the tip ends of the arm portions 121. In this way, a lifting movement in accordance with the cam profile of the plate cams 117 and 118 is input to the lift plate 120 via the lift cam followers 122, so that the lift plate 120 is lifted while maintaining a horizontal state, and this lifting movement is input from the lift plate 120 to the output shaft 106 such that the output shaft 106 carries out a stable, directly- vertical lifting operation without tilting.

A ring-shaped member 123 is arranged covering the upper portion of the output shaft 106, and between the lower end of the ring-shaped member 123 and a circular depression 124 of the lift plate 120 formed around the output shaft 106, a thrust bearing 125 is interposed to support the thrust produced between the lift plate 120 and the output shaft 106 during the transmission of a lifting movement and to allow rotation of the output shaft 106 relative to the lift plate 120. A pallet 126 on which the workpiece W is mounted is bolted to the ring-shaped member 123 at the upper end of the output shaft 106. An upper end 127 of the guide member 119 passes through the ring-shaped member 123 and, in order to stabilize the revolving movement and the lifting movement of the pallet 126, is engaged with an aperture portion 128 formed in the center of revolution of the pallet 12 6, such that it is rotatable and relatively movable in the vertical direction.

Further, the output shaft 106 is provided with a turret 115 that is arranged under the lift plate 120 and that has rotation transmitting cam followers 116 which are engaged with the roller gear cam 114. The rotation transmitting cam followers 116 are arranged at equal intervals in the circumferential direction of the turret 115. In this way, the turret 115 is configured so that the intermittent rotation movements that are output by the roller gear cam 114 are input to the output shaft 106.

The turret 115 , in particular, is formed integrally with the output shaft 106 as a portion of the output shaft 106 itself, without any kind of junction with respect to the output shaft 106, and consequently, the output shaft 106 and the turret 115 become a functional portion that is fabricated as a single component, and are formed such that they are coupled together through the high rigidity of the material of that component. It should be noted that a sealing member 129 is arranged in the housing 103 to seal the portion through which the output shaft 106 passes.

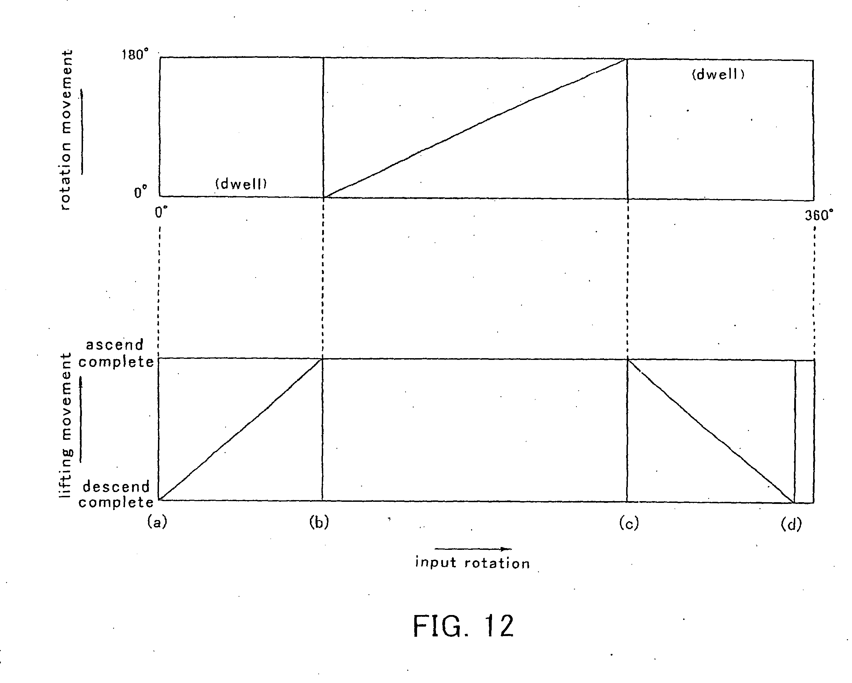

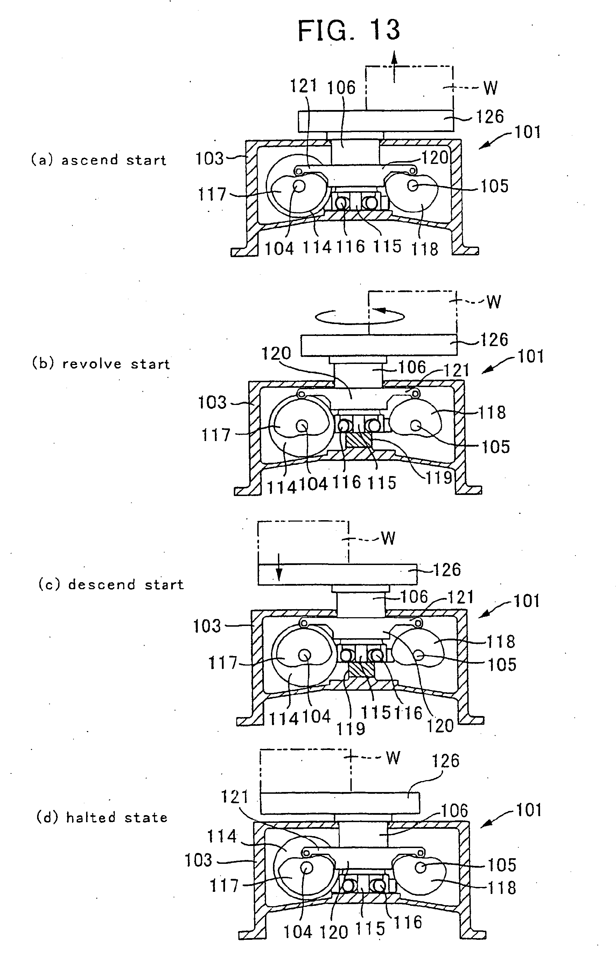

FIG. 12 and FIG. 13 show line charts of the timing of an intermittent rotation movement and a lifting movement respectively output by the roller gear cam 114 and the plate cams 117 and 118 that are rotationally driven by the primary input shaft 104, which is rotationally driven continuously in one direction, and also show corresponding operation states of the APC device 101.

Within the period in which the primary input shaft 104 rotates once for 360°, during the period ((a)-(b)) in which the output shaft 106 carries out an ascending lifting operation, while being guided with the guide member 119, that is caused by the plate cams 117 and 118 via the lift plate 120, the roller gear cam 114 is in a dwell period in which no rotation displacement is output even when the primary input shaft 104 is rotating, and the rotation of the turret 115 is in a halted state. Then, when the ascending lifting operation of the output shaft 106 is completed and the output shaft 106 enters a halted state, the output shaft 106 carries out a rotation operation for 180° ((b)-(c)), while being guided with the guide member 119, that is caused by the roller gear cam 114 via the turret 115. Then, when the rotation operation of the output shaft 106 up to 180° is completed and the roller gear cam 114 enters a dwell period so that the rotation of the turret 115 is brought into a halted state, the output shaft 106 carries out a descending lifting operation ((c)-(d)), while being guided with the guide member 119, that is caused by the plate cams 117 and 118. These operations are repeated for every revolution of the primary input shaft 104. It should be noted that, in the period from the completion of the descending lifting operation until the start of the next ascending lifting operation, a slight period of a halted state (d) is created according to the settings of the cam profiles of the plate cams 117 and 118.

Consequently, the pallet 126 attached to the output shaft 106 continuously carries out an operation that is completed with two revolutions of the primary input shaft wherein, for the first revolution of the primary input shaft 104, the pallet is raised, rotated for 180°, and lowered, and then for the second revolution, it is raised again, rotated for 180° in the same direction, and lowered. During this period, the primary input shaft 104 and the secondary input shaft 105, which cause the output shaft 106 to lift and rotate, continuously rotate at a constant velocity without slowing down or pausing.

In this series of operations, the turret 115, which is formed integrally with the output shaft 106, is lifted upwards and downwards together with the output shaft 106. That is, when the output shaft 106 completes an ascending lift during the dwell period of the roller gear cam 114 (at this time the cam profile of the roller gear cam 114 is straight in the vertical direction so that there is no displacement of the rotation transmitting cam followers 116 engaged with this cam) in accordance with the cam profiles of the roller gear cam 114 and the plate cams 117 and 118 , the rotation transmitting cam followers 116 engage with the roller gear cam 114, after which the rotation movement of the roller gear cam 114 is input to the turret 115, and when the output shaft 106 subsequently performs a descending lift during the dwell period of the roller gear cam 114 , the rotation transmitting cam followers 116 are released from the roller gear cam 114.

It should be noted that the extent of the release of the rotation transmitting cam followers 116 from the roller gear cam 114 can be adjusted in relation to the lift amount, and it is possible to set the meshing of these components so that they do not completely disengage, or to set them so that they do completely disengage. When they are set so that they completely disengage, it is preferable that a detent or the like is provided to impede the rotation of the turret 115 or the output shaft 106 in order to ensure restoration of engagement of the meshing.

With the cam device according to the present embodiment described above, since the output shaft 106 is subjected to a lifting operation by inputting a lifting movement from the lift plate 120 with at least four plate cams 117 and 118 provided at the primary input shaft 104 and the secondary input shaft 105, which rotate in synchronization with each other, it is possible to share the load of heavy items among the plate cams 117 and 118 and ensure a stable, directly-vertical lifting movement without tilting the output shaft 106, and therefore it is possible to improve the stability of movement of the output shaft 106 to which the load of heavy items is applied.

Furthermore, since the turret 115 is formed integrally with the output shaft 106 , it is possible to ensure cons iderable rigidity without enlarging these components to which the lifting movements and rotation movements are input. It is also possible to input high rotation torque to the turret 115 while ensuring lifting operations and rotation operations that compare favorably with conventional operations with respect to the output shaft 106, and it is also possible to handle heavy items appropriately while maintaining a compact device configuration.

Furthermore, maintenance becomes easy and it is possible to contribute to higher ecological standards, since the device is conf igured with the cams 114, 117 , and 118 as main components from which hydraulic devices are eliminated. Furthermore, the plate cams 117 and the roller gear cam 114 of the primary input shaft side are provided at the same primary input shaft 104, and the rotation of the secondary input shaft 105 is synchronized with the primary input shaft 104 as regards the plate cams 118 of the secondary input shaft side. Therefore, the timing of the lifting movements and rotation movements of these can be completely synchronized, thus enabling higher speeds in the device operation.

Moreover, since the output shaft 106 is formed as a hollow cylindrical member that is provided in one piece with the turret 115 and its rotation operations and lifting operations are guided by the guide member 119 inserted in the output shaft 106, the guide member 119 is able to support the load applied to the output shaft 106, which handles heavy items, and suitably guide the movements therein, thus enabling the stability of movement of the output shaft 106 to be improved. Further, it is possible to improve stability in revolution and lifting movements of the pallet 126, since the guide member 119 arranged in the housing 103 is configured to be engaged with the pallet 126.

The foregoing embodiment was described using the plate cams 117 and 118 as illustrative examples of lift generating cams, but instead of these, it is also possible to use groove cams. Furthermore, the foregoing embodiment was described using an example of a cam device according to the present invention being applied to the APC device 101, but there is no limitation to this, and naturally, the invention may also be applied to various large-scale mechanical devices that output both lifting operations and rotation operations to handle heavy items.

### Industrial Applicability

With a cam device according to the present invention, it is possible to ensure higher ecological standards by adopting a device configuration that uses cams as a main component, to enable the transmission of high rotation torque while making the device compact by forming a turret integrally with the output shaft, to achieve high-speed operation by being able to output lifting movements and rotation movements with the rotation of a single input shaft, and to be suitably applied as a base machine for various types of mechanical equipments such as APC devices for handling heavy items.

Furthermore, the movements of the output shaft that handles heavy items can be suitably guided by a guide member, thus enabling the stability of those movements to be improved.

Moreover, with a pair of lifting means that sandwich the output shaft therebetween from both sides, it is possible to provide support for the load of a heavy item by sharing it between the pair of lifting means, thus enabling the stability of movement of the output shaft to be improved.

Further, with a cam device according to the present invention, it is possible to ensure higher ecological standards by adopting a device configuration that uses cams as a main component, to enable the transmission of high rotation torque while making the device compact by forming a turret integrally with the output shaft, and to achieve high-speed operation by being able to output lifting movements and rotation movements from the rotation of a primary input shaft. Moreover, it is possible to appropriately support a load of a heavy item by sharing the load among at least four lift generating cams, and it is therefore possible to apply the present invention suitably as a base machine for various types of mechanical equipments such as APC devices for handling heavy items.

Furthermore, in such a cam device, the movements of the output shaft that handles heavy items can be suitably guided by a guide member, thus enabling the stability of those movements to be improved.

## Claims

1. A cam device comprising
an output shaft (5; 106) for performing a rotation operation and a lifting operation by receiving a rotation movement and a lifting movement that are respectively output from a rotation converting cam (7) and a lift generating cam (10) that are provided on an input shaft (4; 104) that is driven to rotate, and
a turret (8; 115) for inputting, to said output shaft (5; 106), said rotation movement that is output from said rotation converting cam (7),
wherein said output shaft (5; 106), which includes said turret (8; 115), performs said rotation operation and said lifting operation while being guided by a guide member (14);
**characterised in that**:
said turret (8; 115) is formed integrally with said output shaft (5; 106), and
said output shaft (5; 106), which includes said turret (8; 115), is formed as a hollow cylindrical member, and said guide member (14) for guiding said rotation operation and said lifting operation of said output shaft (5; 106) is inserted into said output shaft (5; 106).

2. A cam device according to claim 1,
wherein a pair of lifting arms (12) for inputting, to said output shaft (5), said lifting movement that is output from said lift generating cam (10) is provided in correspondence with said lift generating cam (10), and
wherein each of said lifting arms has a hole through which said input shaft (4) is inserted so that said lifting arm does not interfere with said input shaft.

3. A cam device according to claim 1 further comprising:
a secondary input shaft (105) that is arranged side by side with said input shaft (104) and that rotates in synchronization with said input shaft by receiving transmission of rotation of said input shaft via a rotation transmitting means (109);
at least two primary shaft-side lift generating cams (117) arranged at said input shaft;
at least two secondary shaft-side lift generating cams (118) arranged at said secondary input shaft; and
a lift plate (120) that is lifted by receiving a lift movement that is output from the at least four secondary shaft-side lift generating cams and primary shaft-side lift generating cams; and
wherein said output shaft performs said lifting operation by receiving said lifting movement from said lift plate.

## Patentansprüche

1. Nockenvorrichtung, mit
einer Ausgangswelle (5; 106) zum Ausführen eines Drehvorgangs und eines Hubvorgangs durch Empfangen einer Drehbewegung und einer Hubbewegung, die von einem brehumsctzungsnocken (7) bzw. einem Huberzeugungsnocken (10) ausgegeben werden, die an einer Eingangswelle (4; 104) vorgesehen sind, die rotatorisch angetrieben wird, und
einem Revolverkopf (8; 115), um in die Ausgangswelle (5; 106) die Drehbewegung einzugeben, die von dem Drehumsetzungsnocken (7) ausgegeben wird,
wobei die Ausgangswelle (5; 106), die den Revolverkopf (8; 115) enthält, den Drehvorgang und den Hubvorgang ausführt, währen sie durch ein Führungselement (14) geführt wird;
**dadurch gekennzeichnet, dass**:
der Revolverkopf (8; 115) einteilig mit der Ausgangswelle (5; 106) ausgebildet ist und
die Ausgangswelle (5; 106), die den Revolverkopf (8; 115) aufweist, als ein hohles zylindrisches Element ausgebildet ist und das Führungselement (14) zum Führen des Drehvorgangs und des Hubvorgangs der Ausgangswelle (5; 106) in die Ausgangswelle (5; 106) eingesetzt ist.

2. Nockenvorrichtung nach Anspruch 1,
wobei entsprechend dem Huberzeugungsnocken (10) ein Paar Hubarme (12) vorgesehen ist, um in die Ausgangswelle (5) die von dem Huberzeugumgsnocken (10) ausgegebene Hubbewegung einzugeben, und
wobei jeder der Hubarme ein Loch besitzt, durch das die Eingangswelle (4) eingesetzt ist, so dass sich der Hubarm und die Eingangswelle nicht stören.

3. Nockenvorrichtung nach Anspruch 1, ferner mit:
einer sekundären Eingangswelle (105), die neben der Eingangswelle (104) angeordnet ist und sich synchron mit der Eingangswelle dreht, indem sie die Übertragung der Drehung der Eingangswelle über ein Drehübertragungsmittel (109) empfängt;
wenigstens zwei primären wellenseitigen Huberzeugungsnocken (117), die an der Eingangswelle angeordnet sind;
wenigstens zwei sekundären wellenseitigen Huherzeugungsnocken (118), die an der sekundären Eingangswelle angeordnet sind; und
einer Hubplatte (120), die durch Empfangen einer Hubbewegung, die von den wenigstens vier sekundären wellenseitigen Huberzeuglungsnocken und primären wellenseitigen Huberzeugungsnocken ausgegeben wird, angehoben wird; und
wobei die Ausgangswelle den Hubvorgang durch Empfangen der Hubbewegung von der Hubplatte ausführt.

## Revendications

1. Dispositif à came comprenant :
un arbre de sortie (5 ; 106) pour exécuter une opération de rotation et une opération de levée en recevant un mouvement de rotation et un mouvement de levée qui sont respectivement délivrés en sortie depuis une came (7) de conversion de rotation et une came (10) de génération de levée qui sont pourvues sur un arbre d'entrée (4 ; 104) qui est entraîné en rotation, et
un barillet (8 ; 115) pour appliquer en entrée, audit arbre de sortie (5 ; 106), ledit mouvement de rotation qui est délivré en sortie de ladite came (7) de conversion de rotation,
dans lequel ledit arbre de sortie (5 ; 106), qui comporte ledit barillet (8 ; 115), exécute ladite opération de rotation et ladite opération de levée tout étant guidé par un élément de guidage (14) ;
**caractérisé en ce que** :
ledit barillet (8 ; 115) est formé solidaire avec ledit arbre de sortie (5 ; 106), et
ledit arbre de sortie (5 ; 106), qui comporte ledit barillet (8 ; 115), est formé comme un élément cylindrique creux, et ledit élément de guidage (14) pour guider ladite opération de rotation et ladite opération de levée dudit arbre de sortie (5 ; 106) est inséré dans ledit arbre de sortie (5 ; 106).

2. Dispositif à came selon la revendication 1,
dans lequel une paire de bras de levée (12) pour appliquer enentrée, audit arbre de sortie (5), ledit mouvement de levée qui est délivré en sortie de ladite came (10) de génération de levée, est prévue en correspondance avec ladite came (10) de génération de levée, et
dans lequel chacun desdits bras de levée a un trou à travers lequel ledit arbre d'entrée (4) est inséré de sorte que ledit bras de levée n'interfère pas avec ledit arbre d'entrée.

3. Dispositif à came selon la revendication 1, comprenant en outre :
un arbre d'entrée secondaire (105) qui est agencé côte à côte avec ledit arbre d'entrée (104) et qui tourne de manière synchronisée avec ledit arbre d'entrée en recevant une transmission de rotation dudit arbre d'entrée par l'intermédiaire d'un moyen (109) de transmission de rotation ;
au moins deux cames (117) de génération de levée côté arbre primaire agencées au niveau dudit arbre d'entrée ;
au moins deux cames (118) de génération de levée côté arbre secondaire agencées au niveau dudit arbre d'entrée secondaire ; et
une plaque de levée (120) qui est soulevée en recevant un mouvement de levée qui est délivré en sortie depuis les au moins quatre cames de génération de levée côté arbre secondaire et cames de génération de levée côté arbre primaire ; et
dans lequel ledit arbre de sortie exécute ladite opération de levée en recevant ledit mouvement de levée de ladite plaque de levée.
